# NOUVEAU FASCICULE DE BREVET EUROPEEN

(11) **EP 2 373 713 B2**
(45) Date de publication et mention de la décision concernant l'opposition: **04.10.2017**
(45) Mention de la délivrance du brevet: 08.01.2014
(21) Numéro de dépôt: 09756803.4
(22) Date de dépôt: 16.11.2009
(51) Int. Cl.: C08F 290/06, C08L 55/00, C08L 51/08, C08L 27/06

(54) **MACROMONOMERES AMELIORANT LA STABILITE THERMIQUE DE POLYMERES (METH)ACRYLIQUES PEIGNE, UTILISATION DE CES POLYMERES DANS DES COMPOSITIONS PLASTIQUES CHARGEES**
MAKROMONOMERE, DIE DIE WÄRMESTABILITÄT VON (METH)ACRYLKAMMPOLYMEREN VERBESSERN, VERWENDUNG DER POLYMERE IN GEFÜLLTEN KUNSTSTOFFZUSAMMENSETZUNGEN
MACROMONOMERS IMPROVING THE THERMAL STABILITY OF (METH)ACRYLIC COMB POLYMERS, USE OF SAID POLYMERS IN CHARGED PLASTIC COMPOSITIONS

(30) Priorité: 18.12.2008 FR 0858748
(43) Date de publication de la demande: 12.10.2011
(73) Titulaire: COATEX, 69730 Genay (FR)
(72) Inventeur: GUERRET, Olivier, F-69890 La Tour de Salvagny (FR); MONGOIN, Jacques, F-69650 Quincieux (FR); TROUVE, Patrick, F-92140 Clamart (FR)
(74) Mandataire: Marollé, Patrick Pierre Pascal
(86) Numéro de dépôt international: PCT/IB2009/007481
(87) Numéro de publication internationale: WO 2010/070402

(56) Documents cités:
- WO-A1-2007/052122
- WO-A2-2008/053296
- US-A1- 2002 111 429

## Description

Les matériaux plastiques interviennent dans de nombreux objets manufacturés car leurs modes de transformation par injection, pressage, moulage ou calandrage permettent facilement de les mettre en oeuvre. Ces matériaux, constitués d'une résine, sont très souvent additivés d'une charge minérale ou organique. Une des fonctions de ladite charge est de se substituer à la résine en général onéreuse, permettant ainsi de diminuer le coût global du matériau.

Ces charges sont nombreuses, telles que le talc, l'alumine, le dioxyde de titane, l'oxyde de magnésium, le sulfate de baryum, l'aluminium, la silice, le kaolin ou encore le carbonate de calcium naturel ou synthétique, comme indiqué dans le document JP 50-028105 qui décrit des matériaux rigides obtenus à partir du mélange d'une ou plusieurs de ces charges avec du PVC.

Ces charges permettent également d'améliorer certaines des propriétés mécaniques de la pièce finale. A titre d'exemple, le carbonate de calcium permet d'améliorer la rigidité du PVC, son temps de refroidissement au cours de l'extrusion, ou encore le dépôt en sortie de filière (communément désigné sous l'expression anglaise "die build-up"). Ceci est notamment décrit dans le document "The use of calcium carbonate to enhance the physical properties of rigid vinyl products" (Society of Plastic Engineering, Conf., 12-14 octobre 1999).

Classiquement, la charge minérale ou organique est introduite dans la résine plastique sous forme d'une poudre sèche. Ladite poudre peut résulter d'une étape de broyage à sec, d'une étape de broyage en milieu humide suivie d'un séchage, cette poudre pouvant même être traitée avant addition dans la résine. En outre, de nombreux additifs peuvent être aussi introduits dans ce type de formulation, tels que des modificateurs d'impact, des agents compatibilisants, des stabilisants thermiques, un lubrifiant, un modificateur de rhéologie, etc...

A cet égard, certains additifs chimiques ayant une structure tout à fait particulière connaissent depuis quelques années un intérêt grandissant pour le formulateur de compositions plastiques chargées : il s'agit des copolymères (méth)acryliques de type peigne. A travers cette expression, on désigne un copolymère constitué d'un squelette essentiellement linéaire et de nature (méth)acrylique, sur lequel sont greffés au moins 2 segments latéraux constitués d'au moins un "macromonomère". Le terme "macromonomère" désigne un polymère ou un copolymère non soluble dans l'eau, et possédant au moins un groupe terminal disposant d'une fonction éthylénique insaturée.

Ainsi, le document WO 2007 / 052122 démontre-t-il que de tels copolymères, mis en oeuvre dans des formulations thermoplastiques ou thermodurcissables chargées, permettent d'en améliorer la résistance à l'impact sans pour autant altérer leur rigidité. Dans des formulations chargées et à base de résines chlorées, ces copolymères se comportent comme des agents compatibilisants très efficaces vis-à-vis du carbonate de calcium : c'est l'objet du document WO 2008 / 053296 qui divulgue que l'état de dispersion de la charge est amélioré dans la résine, ce qui conduit à des propriétés optiques et mécaniques améliorées. Enfin, le document WO 2008 / 107787 décrit la fonction modificateur de rhéologie de tels copolymères, qui permettent avantageusement de diminuer la viscosité de résines PVC chargées en carbonate de calcium.

Selon l'enseignement des trois documents précités, ces copolymères peignes sont obtenus en faisant réagir un monomère qui est l'acide (méth)acrylique avec un macromonomère de formule (I) :

R-(A-O)ₘ-(B-O)ₙ-R' (I)

Dans cette formule, m et n sont des entiers dont l'un au moins est non nul, A et B désignent des groupes alkyles ayant de 2 à 4 atomes de carbone, R désigne une fonction insaturée polymérisable, et R' représente l'hydrogène ou un groupement alkyle ayant de 1 à 40 atomes de carbone.

La fabrication de tels macromonomères est bien connue de l'homme du métier, qui pourra se reporter à titre d'exemple au document US 6 034 208. A travers le chaînage- (A-O)ₘ-(B-O)ₙ-, la Demanderesse entend désigner aussi bien une répartition statistique que sous forme de blocs des unités A-O et B-O.

Or, la Demanderesse est parvenue à démontrer qu'une classe particulière de ces copolymères résolvait de manière tout à fait avantageuse et inattendue, un problème technique fondamental et inhérent aux méthodes de transformation des formulations plastiques chargées. Ce problème est celui de la stabilité thermique desdites formulations : en effet, ces dernières sont destinées à subir, en général à des températures élevées, des opérations de transformation par injection, pressage, moulage ou calandrage.

On comprend aisément que la stabilité thermique de ces compositions, aux températures où elles sont mises en oeuvre, constitue un paramètre essentiel. Il apparaît aussi de manière évidente que, si la formulation plastique chargée contient un additif susceptible de se dégrader sous l'effet de la température, c'est la stabilité même de ladite formulation et donc sa cohésion qui risquent d'être affectées.

Poursuivant ses recherches en vue d'optimiser les propriétés de résistance à la température des copolymères (méth)acryliques peigne de l'art antérieur, la Demanderesse a su identifier parmi ces composés une classe particulière de produits présentant une résistance à la température tout à fait surprenante. Il s'agit de copolymères issus de la réaction entre un monomère (méth)acrylique et un macromonomère de formule (I) dans laquelle à la fois m et n sont non nuls et A et B désignent respectivement le groupe CH₂-CH₂ et le groupe CH₂-CH-CH₃. En d'autres termes, la demanderesse est parvenue à démontrer que c'est la présence simultanée de groupements oxyalkylés différents l'un de l'autre, à savoir respectivement le groupe CH₂-CH₂ et le groupe CH₂-CH-CH₃, dans le macromonomère de formule (I) qui améliore la stabilité thermique du copolymère final.

Rien ne laissait suggérer un tel résultat. En effet, les documents WO 2007 / 052122. WO 2008 / 053296 et WO 2008/107787 ne décrivaient que des groupements oxyéthylés pour le macromonomère de formule (I) : ils ne contenaient donc aucun enseignement sur le possible rôle jouée par des chaînons oxyalkylés de nature différente au sein dudit macromonomère. De manière tout à fait surprenante, et extrêmement marquée par rapport aux copolymères (méth)acryliques peigne de l'art antérieur, les copolymères de la présente invention présentent des températures de décomposition thermique encore jamais atteintes : celles-ci sont supérieures de plus de 100°C à celles de l'art antérieur.

La fonction apportée par ledit macromonomère de l'invention, est celle d'améliorer la stabilité à la température du copolymère (méth)acrylique peigne, issu de la copolymérisation de ce macromonomère avec un monomère (méth)acrylique. Le polymère peigne résultant est ensuite mis en oeuvre pour traiter/disperser/broyer une charge minérale ou organique, et incorporé alors via cette charge sous forme de poudre sèche, dans la résine plastique.

Sans l'assimiler à ce que l'homme du métier appelle un stabilisant thermique, la Demanderesse considère néanmoins que ledit copolymère peigne apporte la nouvelle fonction d'amélioration de la stabilité thermique du matériau plastique dans lequel il est incorporé et ce, selon la définition suivante : toutes choses étant égales par ailleurs, le copolymère peigne de l'invention améliore la stabilité thermique du matériau plastique, par rapport à la même formulation plastique mais contenant un copolymère peigne de l'art antérieur. Le risque de dégrader thermiquement le copolymère peigne au sein du matériau plastique est donc limité : le risque de dégrader le matériau lui-même est donc également réduit.

Aussi, l'objet de l'invention consiste en l'utilisation dans un procédé de fabrication d'un copolymère (méth)acrylique peigne par copolymérisation entre :
a) un monomère (méth)acrylique,
b) et un macromonomère oxyalkylé ayant au moins une fonction insaturée éthylénique,
comme agent améliorant la stabilité thermique dudit copolymère, d'un macromonomère b) caractérisé en ce qu'il répond à la formule (I) :

R-(A-O)ₘ-(B-O)ₙ-R' (I)

avec :
- m et n sont des entiers non nuls et inférieurs à 150,
- A et B désignent des groupes alkyles différents l'un de l'autre, répartis de manière bloc ou statistique et préférentiellement statistique, le groupe A désignant le groupe CH₂-CH₂ et le groupe B désignant le groupe CH₂-CH-CH₃,
- R désigne une fonction insaturée polymérisable,
- R' représente l'hydrogène ou un groupement alkyle ayant de 1 à 40 atomes de carbone, préférentiellement l'hydrogène ou le radical méthyl.

Cette utilisation d'un macromonomère dans un procédé de fabrication d'un copolymére est caractérisée en outre en ce que ledit procédé met en oeuvre, par rapport au poids total des constituants du copolymère peigne, ce total étant égal à 100 :
a) de 5 % à 20 % dudit monomère qui est l'acide (méth)acrylique,
b) de 80 % à 95 % dudit macromonomère de formule (I).

Cette utilisation d'un macromonomère dans un procédé de fabrication d'un copolymère est aussi caractérisée en ce que ledit procédé a lieu en continu, en semi-continu ou en batch. Des exemples de tels procédés figurent notamment dans les documents US 6 815 513, US 6 214 958, US 7 232 875.

Cette utilisation d'un macromonomère dans un procédé de fabrication d'un copolymère est aussi caractérisée en ce que ledit procédé consiste en une copolymérisation radicalaire en solution, en émulsion directe ou inverse, en suspension ou précipitation dans des solvants, en présence de systèmes catalytiques et d'agents de transfert, ou encore en une polymérisation radicalaire contrôlée et préférentiellement en la polymérisation contrôlée par des nitroxydes (NMP) ou par des cobaloxymes, en la polymérisation par transfert d'atome radicalaire (ATRP), en la polymérisation radicalaire contrôlée par des dérivés soufrés, choisis parmi des carbamates, des dithioesters ou des trithiocarbonates (RAFT) ou des xanthates.

Cette utilisation d'un macromonomère dans un procédé de fabrication d'un copolymère est aussi caractérisée en ce que ledit procédé comporte une étape de neutralisation totale ou partielle dudit copolymère par un ou plusieurs agents de neutralisation disposant d'un cation monovalent ou polyvalent, lesdits agents étant choisis préférentiellement parmi l'ammoniaque ou parmi les hydroxydes et / ou oxydes de calcium, de magnésium, ou parmi les hydroxydes de sodium, de potassium, de lithium, ou parmi les amines primaires, secondaires ou tertiaires aliphatiques et / ou cycliques telles que préférentiellement la stéarylamine, les éthanolamines (mono-, di-, triéthanolamine), la mono et diéthylamine, la cyclohexylamine, la méthylcyclohexylamine, l'amino méthyl propanol, la morpholine, et de manière préférentielle en ce que l'agent de neutralisation est l'hydroxyde de sodium.

Cette utilisation d'un macromonomère dans un procédé de fabrication d'un copolymère est aussi caractérisée en ce que ledit procédé comporte une étape de distillation et de séparation dudit copolymère en plusieurs phases, selon des procédés statiques ou dynamiques, par un ou plusieurs solvants polaires appartenant préférentiellement au groupe constitué par l'eau, le méthanol, l'éthanol, le propanol, l'isopropanol, les butanols, l'acétone, le tétrahydrofurane ou leurs mélanges.

Un autre objet, qui n'est pas selon l'invention, consiste en l'utilisation, dans un procédé de fabrication d'un matériau plastique chargé d'un copolymère (méth)acrylique peigne tel que décrit ci-contre.

Cette utilisation d'un copolymère dans un procédé de fabrication d'un matériau plastique chargé, est aussi caractérisée en ce que ledit copolymère est obtenu par copolymérisation radicalaire en solution, en émulsion directe ou inverse, en suspension ou précipitation dans des solvants, en présence de systèmes catalytiques et d'agents de transfert, ou encore en une polymérisation radicalaire contrôlée et préférentiellement en la polymérisation contrôlée par des nitroxydes (NMP) ou par des cobaloxymes, en la polymérisation par transfert d'atome radicalaire (ATRP), en la polymérisation radicalaire contrôlée par des dérivés soufrés, choisis parmi des carbamates, des dithioesters ou des trithiocarbonates (RAFT) ou des xanthates.

Cette utilisation d'un copolymère dans un procédé de fabrication d'un matériau plastique chargé est aussi caractérisée en ce que ledit copolymère est totalement ou partiellement neutralisé par un ou plusieurs agents de neutralisation disposant d'un cation monovalent ou polyvalent, lesdits agents étant choisis préférentiellement parmi l'ammoniaque ou parmi les hydroxydes et / ou oxydes de calcium, de magnésium, ou parmi les hydroxydes de sodium, de potassium, de lithium, ou parmi les amines primaires, secondaires ou tertiaires aliphatiques et / ou cycliques telles que préférentiellement la stéarylamine, les éthanolamines (mono-, di-, triéthanolamine), la mono et diéthylamine, la cydohexylamine, la méthylcyclohexylamine, l'amino méthyl propanol, la morpholine, et de manière préférentielle en ce que l'agent de neutralisation est choisi parmi la triéthanolamine et l'hydroxyde de sodium.

Cette utilisation d'un copolymère dans un procédé de fabrication d'un matériau plastique chargé est aussi caractérisée en ce que ledit copolymère est distillé et séparé en plusieurs phases, selon des procédés statiques ou dynamiques, par un ou plusieurs solvants polaires appartenant préférentiellement au groupe constitué par l'eau, le méthanol, l'éthanol, le propanol, l'isopropanol, les butanols, l'acétone, le tétrahydrofurane ou leurs mélanges.

Cette utilisation d'un copolymère dans un procédé de fabrication d'un matériau plastique chargé est aussi caractérisée en ce que on met en oeuvre de 0,05 % à 5 %, préférentiellement de 0,1 % à 3 %, très préférentiellement de 0,1 % à 1 % en poids sec dudit copolymère, par rapport au poids sec de charge.

Cette utilisation d'un copolymère dans un procédé de fabrication d'un matériau plastique chargé est aussi caractérisée en ce que ledit procédé comporte au moins une étape d'incorporation dudit copolymère dans le matériau plastique chargé :
1. sous forme de poudre sèche, résultant des étapes de :
   - broyage et / ou dispersion en milieu aqueux de la charge en présence dudit polymère, et éventuellement en présence d'au moins un autre agent de broyage en voie humide et / ou d'au moins un autre agent dispersant,
   - séchage de la dispersion et / ou de la suspension aqueuse de matière minérale ou carbonée obtenue, avec introduction éventuelle dudit polymère, traitement puis éventuellement classification de la poudre obtenue
2. et / ou sous forme de poudre sèche, résultant des étapes de :
   - broyage à sec de la charge en présence dudit polymère, et éventuellement en présence d'au moins un autre agent de broyage à sec,
   - traitement et classification éventuelle de la poudre obtenue,
3. et / ou sous forme de poudre sèche, résultant des étapes suivantes :
   - introduction dudit polymère dans une dispersion et / ou dans une suspension aqueuse contenant la charge,
   - séchage de la dispersion et / ou de la suspension aqueuse de la charge, avec introduction éventuelle dudit polymère, traitement puis éventuellement classification de la poudre obtenue,
4. et / ou sous forme de poudre sèche résultant du séchage dudit copolymère,
5. et / ou sous forme de poudre sèche résultant des étapes suivantes :
   - introduction dudit copolymère dans une suspension et / ou une émulsion d'au moins un additif choisi parmi un stabilisant thermique et / ou un stabilisant UV et / ou un lubrifiant et / ou un modificateur de rhéologie et / ou un modificateur d'impact de nature organique,
   - séchage de la suspension et / ou de l'émulsion obtenue en présence éventuelle dudit copolymère, puis éventuellement classification de la poudre obtenue.

Cette utilisation d'un copolymère dans un procédé de fabrication d'un matériau plastique chargé est aussi caractérisée en ce que la charge est une charge minérale ou organique, préférentiellement minérale, cette charge minérale étant alors choisie parmi le carbonate de calcium naturel ou synthétique, les dolomies, le calcaire, le kaolin, le talc, l'oxyde de titane, le trihydroxyde d'aluminium, le mica, le noir de carbone, la silice, et en ce qu'elle est choisie préférentiellement parmi le carbonate de calcium naturel ou synthétique, et en ce qu'il s'agit de manière la plus préférée d'un carbonate de calcium naturel.

Cette utilisation d'un copolymère dans un procédé de fabrication d'un matériau plastique chargé est aussi caractérisée en ce que le matériau plastique est constitué d'au moins une résine plastique, choisie parmi les résines thermoplastiques et thermodurcissables.

Cette utilisation d'un copolymère dans un procédé de fabrication d'un matériau plastique chargé est aussi caractérisée en ce que la résine thermoplastique est choisie parmi les résines halogénées, et préférentiellement parmi le PVC, le polychlorure de vinyle surchloré (PVCC), le polyfluorure de vinylidène (PVDF), ou choisie parmi les résines styréniques, et préférentiellement parmi les copolymères styrène-butadiène à haut taux de styrène (HIPS), les copolymères blocs de type Kraton™ les résines du type styrène-acrylonitrile, les résines acrylate-butadiène-styrène, les copolymères styrène méthylméthacrylate, ou choisie parmi les résines acryliques, et préférentiellement parmi le polyméthacrylate de méthyle, ou choisie parmi les polyoléfines, et préférentiellement parmi les polyéthylènes ou les polypropylènes, ou choisie parmi les résines polycarbonates, ou choisie parmi les résines polyesters insaturées, et préférentiellement parmi les polyéthylène téréphthalate et les polybutylène téréphthalate, ou choisie parmi les résines polyuréthanes, ou choisie parmi les résines polyamides, ou le mélange de ces résines, et préférentiellement en ce que la résine thermoplastique est choisie parmi les résines halogénées, et préférentiellement parmi le PVC, le polychlorure de vinyle surchloré (PVCC), le polyfluorure de vinylidène (PVDF), ou les résines acryliques, et préférentiellement parmi le polyméthacrylate de méthyle, ou choisie parmi les résines polycarbonates, ou choisie parmi les résines polyesters insaturées, et préférentiellement parmi les polyéthylène téréphthalate et les polybutylène téréphthalate, et très préférentiellement en ce que cette résine thermoplastique est du PVC.

Cette utilisation d'un copolymère dans un procédé de fabrication d'un matériau plastique chargé est aussi caractérisée en ce que la résine thermodurcissable est choisie parmi les résines acryliques, les phénoplastes, les aminoplastes, les éthoxilines parmi lesquels préférentiellement les époxydes, les polyesters insaturés, les polyuréthanes et les alkydes.

Les exemples qui suivent permettent de mieux appréhender le contenu de l'invention sans toutefois en limiter la portée. L'exemple 2 relatif à des formulations PVC chargées n'est pas un exemple selon l'invention.

Dans tous les exemples, le poids moléculaire et les indices de polymolécularité des polymères mis en oeuvre sont déterminés selon la méthode explicitée ci-dessous, par chromatographie d'exclusion stérique à multi-détection (CES 3D).

La chaîne de CES 3D est composée comme suit :
- dégazeur en ligne pour phase mobile ERC 3112,
- pompe isocratique de type Waters 515 ou Viscotek VE1121,
- injecteur automatique Waters 717+,
- four pour colonnes Waters CHM,
- jeu de 3 colonnes Waters Ultrahydrogel de longueur 30 cm et diamètre interne 7,8 mm 1 colonne linéaire suivie de 2 colonnes 120Å, l'ensemble étant précédé par une colonne de garde de même nature,
- ensemble de détecteurs connectés en parallèle : Viscotek T60A combinant LS et viscosimétrie et réfractomètre différentiel Waters 2410,
- système informatique et logiciel : Viscotek TriSEC 3.0 GPC software.

Composition de la phase mobile :
- préparation d'une solution mère : Na₂SO₄ 666 mM, filtrée à 0,1 µm,
- préparation de la phase mobile à 66,6 mM en Na₂SO₄ (soit une force ionique de 0,2 M) :
   - 10 % en volume de la solution mère précédente,
   - 5 % en volume d'acétonitrile,
   - 85 % en volume d'eau à 18,2 MΩ,
   - pH ajusté à 9,0 par quelques gouttes de soude N.

Paramètres opérationnels:
- débit : 0,8 ml/min,
- température des colonnes et du réfractomètre : 40°C,
- volume d'injection : 100 µl,
- concentration en polymère à l'injection : 2 à 4 mg/ml en fonction de la masse molaire moyenne attendue pour chaque échantillon (optimisation des réponses des détecteurs),
- durée d'analyse : 50 min.

Etalonnage des détecteurs :
Utilisation de deux étalons certifiés :
   - Viscotek PEO22k, étalon de faible indice de polymolécularité pour étalonnage proprement dit du système,
   - Viscotek Dextran T70k, étalon de fort indice pour vérification et affinage de l'étalonnage.

### Exemple 1

Cet exemple illustre la résistance à la dégradation thermique, telle que mesurée par analyse thermogravimétrique, dans le cas de copolymères peignes de l'invention et dans le cas de copolymères peignes de l'art antérieur.
Pour ce faire, on commence par sécher le copolymère qui est ensuite réduit en poudre à l'aide d'une spatule puis d'un mortier.

La mesure thermogravimétrique est réalisée sous air avec un débit de 60 ml/min avec une thermo balance commercialisée par la société TA INSTRUMENTS sous la référence Q500.
On détermine la perte de masse avec la technique de haute résolution dynamique. Les paramètres sont une rampe de montée en température de 30°C / min de 30°C à 600°C, la sensibilité est égale à 1, et la résolution égale à 4. Le débit des gaz durant la mesure est de 40 ml/min pour l'azote et de 60 ml/min pour l'air. Les masses mises en oeuvre sont comprises entre 10 et 24 mg.
On enregistre alors l'évolution du pourcentage de la masse restante de l'échantillon (par rapport à sa masse initiale) en fonction de la température.

### Essai n° 1

Cet essai met en oeuvre un copolymère peigne de l'art antérieur, de poids moléculaire égal à 65 000 g/mol et d'indice de polymolécularité égal à 1,9, totalement neutralisé par la soude, et constitué de, exprimé en pourcentage en poids de chacun de ses constituants :
- 10 % d'acide acrylique,
- 90 % en poids d'un macromonomère de formule (I) dans laquelle R représente le groupe méthacrylate, R' représente le radical méthyl, m = 113, n = 0, A désigne le groupe CH₂-CH₂, le poids moléculaire dudit macromonomère étant égal à 5 000 g/mol.

### Essai n° 2

Cet essai met en oeuvre un copolymère peigne de l'art antérieur, de poids moléculaire égal à 55 000 g/mol et d'indice de polymolécularité égal à 1,7, totalement neutralisé par la soude, et constitué de, exprimé en pourcentage en poids de chacun de ses constituants :
- 10 % d'acide acrylique,
- 90 % en poids d'un macromonomère de formule (I) dans laquelle R représente le groupe méthacrylate, R' représente l'hydrogène, m = 66, n = 0, A désigne le groupe CH₂-CH₂, le poids moléculaire dudit macromonomère étant égal à 3 000 g/mol.

### Essai n° 3

Cet essai met en oeuvre un copolymère peigne de l'art antérieur, de poids moléculaire égal à 72 000 g/mol et d'indice de polymolécularité égal à 2,2, totalement neutralisé par la soude, et constitué de, exprimé en pourcentage en poids de chacun de ses constituants :
- 6 % d'acide acrylique, 4 % d'acide méthacrylique,
- 90 % en poids d'un macromonomère de formule (I) dans laquelle R représente le groupe méthacrylate, R' représente le radical méthyl, m = 44, n = 0, A désigne le groupe CH₂-CH₂, le poids moléculaire dudit macromonomère étant égal à 2 000 g/mol.

### Essai n° 4

Cet essai met en oeuvre un copolymère peigne de l'invention, de poids moléculaire égal à 70 000 g/mol et d'indice de polymolécularité égal à 2,0, totalement neutralisé par la soude, et constitué de, exprimé en pourcentage en poids de chacun de ses constituants :
- 10 % d'acide acrylique,
- 90 % en poids d'un macromonomère de formule (I) dans laquelle R représente le groupe méthacrylate, R' représente l'hydrogène, m = 42, n = 18, A désigne le groupe CH₂-CH₂ et B désigne le groupe CH₂-CH-CH₃, la position des groupes A et B étant de nature statistique, le poids moléculaire dudit macromonomère étant égal à 3 000 g/mol.

### Essai n° 5

Cet essai met en oeuvre un copolymère peigne de l'invention, de poids moléculaire égal à 55 000 g/mol et d'indice de polymolécularité égal à 1,7, totalement neutralisé par la soude, et constitué de, exprimé en pourcentage en poids de chacun de ses constituants :
- 10 % d'acide acrylique,
- 90 % en poids d'un macromonomère de formule (I) dans laquelle R représente le groupe méthacrylate, R' représente l'hydrogène, m = 71, n = 31, A désigne le groupe CH₂-CH₂ et B désigne le groupe CH₂-CH-CH₃, la position des groupes A et B étant de nature statistique, le poids moléculaire dudit macromonomère étant égal à 5 000 g/mol.

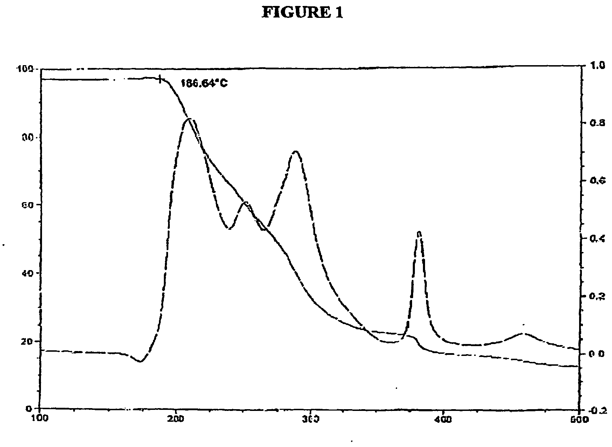

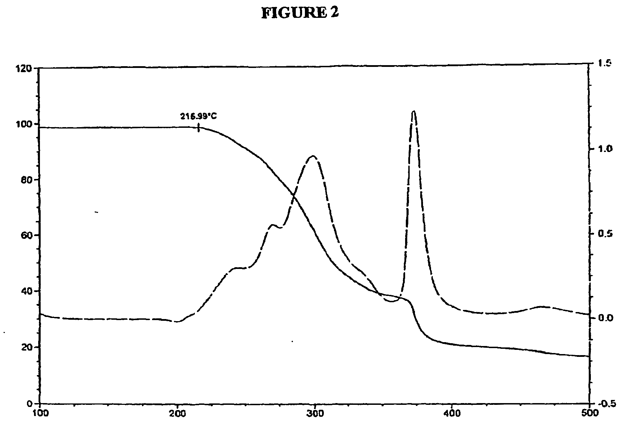

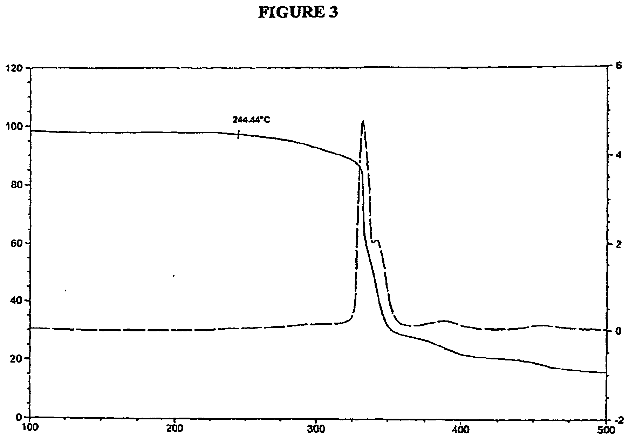

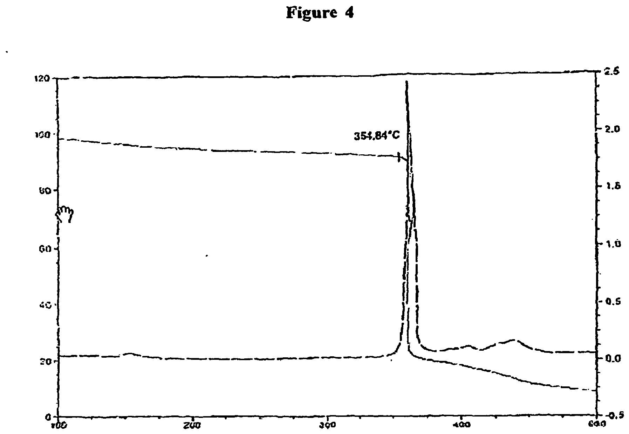

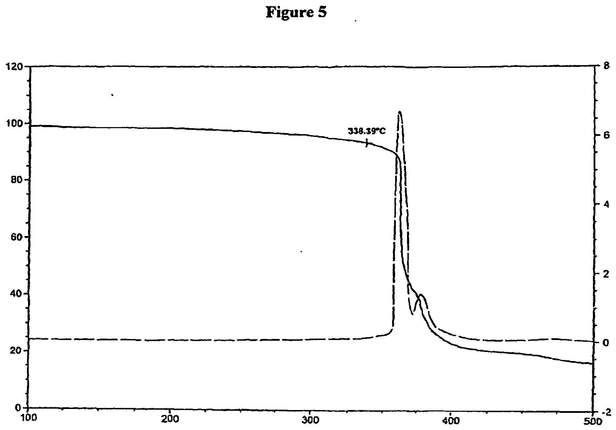

Les figures 1 à 5 représentent en trait plein le % de la masse restante des copolymères des essais n° 1 à 5, en fonction de la température. Les courbes en trait pointillé représentent la dérivée de la courbe en trait plein.

On démontre ainsi que le copolymère de l'invention présente une résistance à la dégradation thermique bien supérieure à celle du copolymère de l'art antérieur : il pourra être avantageusement utilisé dans une formulation plastique chargée, pour en améliorer la stabilité thermique.

### Exemple 2

Cet exemple illustre la mise en oeuvre d'un copolymère selon l'invention et d'un copolymère selon l'art antérieur, dans une formulation PVC chargée : l'objet de l'exemple est de démontrer que les propriétés de résistance à l'impact et de brillance de la pièce obtenue après extrusion sont conservées dans les deux cas, notamment par comparaison avec une formulation ne contenant aucun copolymère peigne.

### Composition des formulations PVC

Pour chacun des essais A, B et C, les formulations PVC fabriquées mettent en oeuvre :
- une résine PVC commercialisée par la société ARKEMA™ sous le nom Lacovyl™ S110P,
- du dioxyde de titane commercialisé par la société KRONOS™ sous le nom Kronos™ 2200,
- un stabilisant thermique commercialisé par la société BARLOCHER™ sous le nom One Pack Baeropan™,
- un lubrifiant commercialisé par la société LAPASSE ADDITIVES CHEMICALS™ sous le nom Lacowax™ EP,
- un additif modificateur de choc organique de type coeur-écorce commercialisé par la société ARKEMA™ sous le nom Durastrength™ 320,
- du carbonate de calcium sous forme de poudre dont la fabrication est explicitée plus avant,
- et éventuellement un copolymère peigne.

Les quantités mises en oeuvre ont été indiquées dans le tableau 1.

### Obtention des poudres sèches de carbonate de calcium

Initialement, on broye une suspension aqueuse de carbonate de calcium qui est une calcite d'Orgon, de manière à ce que 55 % en poids des particules ont un diamètre inférieur à 1 µm tel que mesuré par un appareil de type Sedigraph™ 5100 commercialisé par la société MICROMERITICS™, et pour obtenir une teneur en carbonate de calcium égale à 75 % en poids sec de son poids total.
Le broyage a lieu en présence de 0,28 % en poids sec, par rapport au poids sec de carbonate de calcium, d'un homopolymère de l'acide acrylique, de poids moléculaire égal à 5 500 g/mol et neutralisé par le sodium et le calcium (70 % / 30 % en mole).
On ajoute ensuite dans la suspension 0,45 % en poids sec d'acide stéarique, par rapport au poids sec de carbonate de calcium.

Pour les essais B et C, on introduit ensuite dans la suspension aqueuse obtenue 0,7 % en poids sec, par rapport au poids sec de carbonate de calcium :
- du copolymère peigne de l'art antérieur selon l'essai n° 1,
- du copolymère peigne de l'invention selon l'essai n° 4.
Pour l'essai A, on ne met pas en oeuvre de polymère peigne.

Le protocole de broyage est bien connu, et notamment décrit dans le document FR 2 539 137.

Les suspensions aqueuses de carbonate de calcium obtenues sont ensuite séchées sous forme de poudre au moyen d'un sécheur de type Niro Minor Mobile 2000 (commercialisée par la société NIRO™) muni d'une buse fontaine. Les caractéristiques de ce séchage sont une température d'entrée du gaz de 350°C, une température de sortie du gaz de 100°C, une ventilation ouverte à 99 % et une pression d'air voisine de 2 bars.

### Fabrication des mélanges secs de PVC

Pour chacun des essais, on commence par réaliser le mélange des différents constituants qui rentrent dans la composition des matériaux thermoplastiques. De tels mélanges sont réalisés sur un mixeur de type Loedige™ THK 10.
Le PVC, les agents de stabilisation et l'adjuvant choc sont introduits dans la chambre et soumis à une agitation de 2 600 tours / minute afin d'obtenir une température de 90°C.
La charge minérale et le dioxyde de titane sont alors introduits et lorsque le mélange atteint la température de 120°C, il est refroidi brutalement par diminution de la vitesse à une valeur de 1 500 tours / minute et mise en circulation d'eau dans la double enveloppe. Le mélange est finalement déchargé à la température de 35°C.

### Extrusion des mélanges secs de PVC

Tous les mélanges secs ont été extrudés avec un système Thermoelectron Polylab™ équipée d'une bi-vis et d'une filière plate (30 mm x 3 mm).
Les profilés PVC sont ensuite calibrés à 15°C dans un bain d'eau et sur un système Yvroud.
Les paramètres d'extrusion sont une température des 3 zones égale à 175-180-190°C et une vitesse des vis de 30 tours par minute. La fileuse est chauffée à 190°C.

### Mesure des résistances au choc

Les mesures de résistance au choc sont réalisées selon la norme British Standard BS 7413 : 2003. Les mesures ont été moyennées sur des lots de 10 éprouvettes fabriquées avec la machine Diadisc™ 4200 commercialisée par la société MUTRONIC™.

L'ensemble des données apparaît dans le tableau 1.

**Tableau 1**

| **Essai n°** | **A** | **B** | **C** |
|---|---|---|---|
| Art Antérieur / Invention (AA / IN) | AA | AA | IN |
| Lacovyl™ | 100 | 100 | 100 |
| Kronos™ 2200 | 5 | 5 | 5 |
| One Pack Baeropan™ | 2,5 | 2,5 | 2,5 |
| Lacowax™ | 0,05 | 0,05 | 0,05 |
| Durastrength™ | 6 | 6 | 6 |
| Polymère peigne selon l'art antérieur | 0 | 8 | 0 |
| Polymère peigne selon l'invention | 0 | 0 | 8 |
| Impact (kJ/m²) | 18,6 | 21,4 | 23,9 |

Ces résultats démontrent que les copolymères peigne augmentent la résistance au choc et la brillance de la pièce en PVC. Ils démontrent aussi que le copolymère peigne selon l'invention n'altère pas ces propriétés, par rapport au copolymère peigne de l'art antérieur : on constate même une amélioration de la performance selon le polymère selon l'invention.

### Mesure de propriétés optiques

On mesure les grandeurs L, a et b bien connues de l'homme du métier, à 60° au moyen d'un spectrophotomètre Tri-Gloss commercialisé par la société BYK-GARDNER™.
Pour ce faire, on suit l'évolution de ces grandeurs pour les éprouvettes correspondant aux essais B et C, au moyen du test bien connu de l'homme du métier mettant en oeuvre un four du type Werner Mathis dont la température est fixée à 195°C, et où défile l'échantillon à une vitesse de 4 mm/minute.

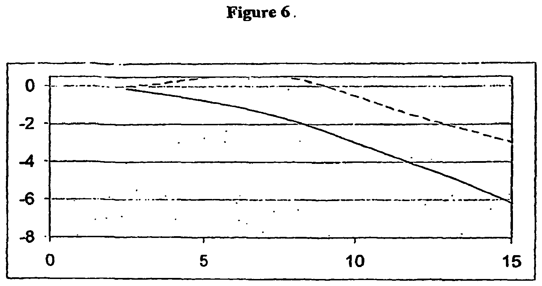

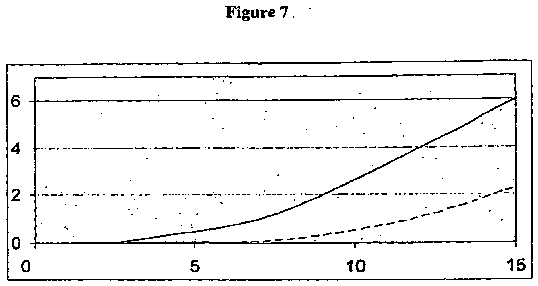

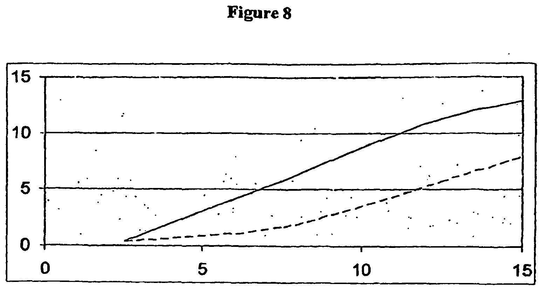

Les figures 6, 7 et 8 représentent respectivement l'évolution de L, a et b pour le plastique chargé selon l'essai B et contenant le copolymère peigne de l'art antérieur (courbe pleine) et pour le plastique chargé selon l'essai C contenant le copolymère peigne selon l'invention (courbe pointillée).
On note une variation beaucoup moins importante des paramètres L, a et b dans le cas du polymère selon l'invention.

### Mesure du dégagement de chlorure d'hydrogène

Sur ces mêmes plastiques chargés, on détermine leur aptitude à dégager, sous l'effet de la température, du chlorure d'hydrogène. Cette mesure est réalisée selon la norme NF EN ISO 182-3 de décembre 2000.

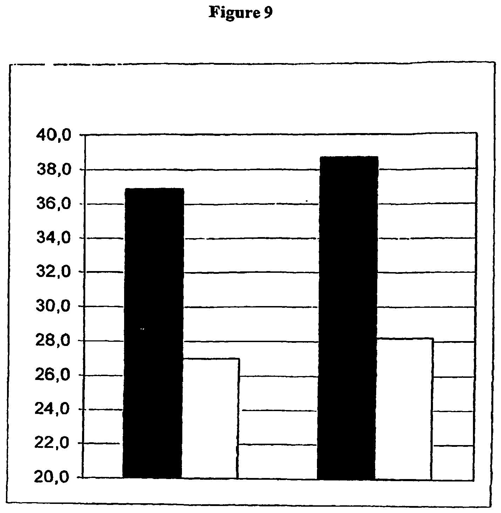

La figure 9 représente, pour les plastiques chargés selon les essais B (2 rectangles de gauche) et C (2 rectangles de droite), le temps en minute des périodes dite d'induction (en noir) et de stabilité jusqu'à obtenir une valeur fixée à 50 µ-Siemens de conductivité (en blanc).
Plus ces temps sont élevés, moins important est le dégagement de chlorure d'hydrogène. On observe que les temps les plus importants sont obtenus dans le cas de la formulation plastique comprenant le polymère selon l'invention (2 rectangles de droite).

## Revendications

1. Utilisation, dans un procédé de fabrication d'un copolymère (méth)acrylique peigne par copolymérisation entre :
a) un monomère (méth)acrylique,
b) et un macromonomère oxyalkylé ayant au moins une fonction insaturée éthylénique,
comme agent améliorant la stabilité thermique dudit copolymère, d'un macromonomère b) **caractérisé en ce qu'**il répond à la formule (I) :
R-(A-O)ₘ-(B-O)ₙ-R' (I)
avec :
- m et n sont des entiers non nuls et inférieurs à 150,
- A et B désignent des groupes alkyles différents l'un de l'autre, répartis de manière bloc ou statistique et préférentiellement statistique, le groupe A désignant le groupe CH₂-CH₂ et le groupe B désignant le groupe CH₂-CH-CH₃,
- R désigne une fonction insaturée polymérisable,
- R' représente l'hydrogène ou un groupement alkyle ayant de 1 à 40 atomes de carbone, préférentiellement l'hydrogène ou le radical méthyl ;
**caractérisée en ce que** ledit procédé met en oeuvre, par rapport au poids total des constituants du copolymère peigne, ce total étant égal à 100 :
a) de 5 % à 20 % dudit monomère qui est l'acide (méth)acrylique,
b) de 80 % à 95 % dudit macromonomère de formule (I).

2. Utilisation selon la revendication 1, d'un macromonomère dans un procédé de fabrication d'un copolymère, **caractérisée en ce que** ledit procédé a lieu en continu, en semi-continu ou en batch.

3. Utilisation selon l'une des revendications 1 à 2, d'un macromonomère dans un procédé de fabrication d'un copolymère, **caractérisée en ce que** ledit procédé consiste en une copolymérisation radicalaire en solution, en émulsion directe ou inverse, en suspension ou précipitation dans des solvants, en présence de systèmes catalytiques et d'agents de transfert, ou encore en une polymérisation radicalaire contrôlée et préférentiellement en la polymérisation contrôlée par des nitroxydes (NMP) ou par des cobaloxymes, en la polymérisation par transfert d'atome radicalaire (ATRP), en la polymérisation radicalaire contrôlée par des dérivés soufrés, choisis parmi des carbamates, des dithioesters ou des trithiocarbonates (RAFT) ou des xanthates.

4. Utilisation selon l'une des revendications 1 à 3, d'un macromonomère dans un procédé de fabrication d'un copolymère, **caractérisée en ce que** ledit procédé comporte une étape de neutralisation totale ou partielle dudit copolymère par un ou plusieurs agents de neutralisation disposant d'un cation monovalent ou polyvalent, lesdits agents étant choisis préférentiellement parmi l'ammoniaque ou parmi les hydroxydes et / ou oxydes de calcium, de magnésium, ou parmi les hydroxydes de sodium, de potassium, de lithium, ou parmi les amines primaires, secondaires ou tertiaires aliphatiques et / ou cycliques telles que préférentiellement la stéarylamine, les éthanolamines (mono-, di-, triéthanolamine), la mono et diéthylamine, la cyclohexylamine, la méthylcyclohexylamine, l'amino méthyl propanol, la morpholine, et de manière préférentielle **en ce que** l'agent de neutralisation est l'hydroxyde de sodium.

5. Utilisation selon l'une des revendications 1 à 4, d'un macromonomère dans un procédé de fabrication d'un copolymère, **caractérisée en ce que** ledit procédé comporte une étape de distillation et de séparation dudit copolymère en plusieurs phases, selon des procédés statiques ou dynamiques, par un ou plusieurs solvants polaires appartenant préférentiellement au groupe constitué par l'eau, le méthanol, l'éthanol, le propanol, l'isopropanol, les butanols, l'acétone, le tétrahydrofurane ou leurs mélanges.

## Patentansprüche

1. Verwendung, in einem Verfahren zur Herstellung eines (Meth)acrylsäure-Kammcopolymers durch Copolymerisation zwischen:
a) einem (Meth)acrylsäuremonomer,
b) und einem alkoxylierten Makromonomer mit mindestens einer ethylenisch ungesättigten funktionellen Gruppe,
eines Makromonomers b), das als Mittel zur Verbesserung der thermischen Stabilität des Copolymers dient und **dadurch gekennzeichnet ist, dass** es der Formel (I) entspricht:
R-(A-O)ₘ-(B-O)ₙ-R' (I)
wobei:
- m und n ganze Zahlen sind, die ungleich null und kleiner als 150 sind,
- A und B Alkylgruppen bezeichnen, die sich voneinander unterscheiden und auf blockbildende Weise oder statistisch, vorzugsweise jedoch statistisch, verteilt sind, wobei die Gruppe A die Gruppe CH₂CH₂ bezeichnet und die Gruppe B die Gruppe CH₂-CH-CH₃ bezeichnet,
- R eine polymerisierbare ungesättigte funktionelle Gruppe bezeichnet,
- R' Wasserstoff oder eine Alkylgruppe mit 1 bis 40 Kohlenstoffatomen, vorzugsweise Wasserstoff oder einen Methylrest, bezeichnet,
**dadurch gekennzeichnet, dass** bei dem Verfahren, bezogen auf das Gesamtgewicht der Bestandteile des Kammcopolymers, welches gleich 100 gesetzt wird,
a) 5 % bis 20 % des Monomers, bei dem es sich um (Meth)acrylsäure handelt,
b) 80 % bis 95 % des Makromonomers der Formel (I).

2. Verwendung nach Anspruch 1, eines Makromonomers in einem Verfahren zur Herstellung eines Copolymers, wobei die Verwendung **dadurch gekennzeichnet ist, dass** das Verfahren kontinuierlich, halbkontinuierlich oder chargenweise abläuft.

3. Verwendung nach einem der Ansprüche 1 oder 2, eines Makromonomers in einem Verfahren zur Herstellung eines Copolymers, wobei die Verwendung **dadurch gekennzeichnet ist, dass** es sich bei dem Verfahren um eine radikalische Polymerisation in Lösung, in direkter oder umgekehrter Emulsion, in Suspension oder mit Fällungsvorgang in Lösungsmitteln, in Gegenwart von katalytischen Systemen und Kettenübertragungsmitteln, oder auch um eine kontrollierte radikalische Polymerisation und vorzugsweise um eine Polymerisation, welche mittels Nitroxiden (NMP) oder mittels Cobaloximen kontrolliert wird, um eine Polymerisation unter Atomtransfer (ATRP), um eine radikalische Polymerisation, welche mittels schwefelhaltiger Verbindungen kontrolliert wird, die aus den Carbamaten, den Dithioestern oder den Trithiocarbonaten (RAFT) oder den Xanthogenaten ausgewählt sind, handelt.

4. Verwendung nach einem der Ansprüche 1 bis 3, eines Makromonomers in einem Verfahren zur Herstellung eines Copolymers, wobei die Verwendung **dadurch gekennzeichnet ist, dass** das Verfahren einen Schritt der vollständigen oder teilweisen Neutralisierung des Copolymers durch ein oder mehrere Neutralisierungsmittel aufweist, welche über ein ein- oder mehrwertiges Kation verfügen, wobei diese Mittel vorzugsweise aus Ammoniak oder aus den Hydroxiden und/oder Oxiden von Calcium, Magnesium, oder aus den Hydroxiden von Natrium, Kalium, Lithium, oder aus den primären, sekundären oder tertiären aliphatischen und/oder zyklischen Aminen wie etwa vorzugsweise Stearylamin, den Ethanolaminen (Mono-, Di- Triethanolamin), Mono- und Diethylamin, Cyclohexylamin, Methylcyclohexylamin, Aminomethylpropanol, Morpholin ausgewählt sind, und vorzugsweise dadurch, dass es sich bei dem Neutralisierungsmittel um Natriumhydroxid handelt.

5. Verwendung nach einem der Ansprüche 1 bis 4, eines Makromonomers in einem Verfahren zur Herstellung eines Copolymers, wobei die Verwendung **dadurch gekennzeichnet ist, dass** das Verfahren einen Schritt der Destillation und der Auftrennung des Copolymers in mehrere Phasen umfasst, und zwar gemäß statischen oder dynamischen Verfahren, mittels eines oder mehrerer polarer Lösungsmittel, die vorzugsweise der Gruppe angehören, welche aus Wasser, Methanol, Ethanol, Propanol, Isopropanol, den Butanolen, Aceton, Tetrahydrofuran oder deren Mischungen besteht.

## Claims

1. Use, in a procedure for manufacturing a comb (meth)acrylic copolymer by copolymerisation between:
a) a (meth)acrylic monomer,
b) and an oxyalkylated macromonomer having at least one unsaturated ethylene function,
as an agent improving the thermal stability of said copolymer, of a macromonomer b) **characterised in that** it complies with the formula (I):
R-(A-O)ₘ-(B-O)ₙ-R' (I)
where:
- m and n are non-zero integers less than 150,
- A and B designate alkyl groups that are different from one another, distributed in blocks or statistically, and preferentially statistically, group A designating the group CH₂-CH₂ and group B designating the group CH₂-CH-CH₃,
- R designates an unsaturated polymerisable function,
- R' represents hydrogen or an alkyl group having 1 to 40 carbon atoms, preferentially hydrogen or the methyl radical,
**characterised in that** said method implements, in relation to the total weight of the constituents of the comb copolymer, this total being equal to 100:
a) from 5% to 20% of said monomer that is (meth)acrylic acid,
b) from 80% to 95% of said macromonomer of formula (I).

2. Use, according to claim 1, of a macromonomer in a method for manufacturing a copolymer, **characterised in that** said method takes place continuously, semi-continuously, or in batches.

3. Use, according to one of claims 1 or 2, of a macromonomer in a method for manufacturing a copolymer, **characterised in that** said method consists of radical copolymerization in a solution, in a direct or reverse emulsion, in a suspension or precipitation in solvents, in the presence of catalytic systems and transfer agents, or even in a controlled radical polymerization, and preferentially in nitroxide-mediated polymerization (NMP) or cobaloxime-mediated polymerization, atom transfer radical polymerization (ATRP), sulphur derivative-mediated radical polymerization, said derivatives being chosen from among carbamates, dithioesters or trithiocarbonates (RAFT) or xanthates.

4. Use, according to one of claims 1 to 3, of a macromonomer in a method for manufacturing a copolymer, **characterized in that** said method comprises a step of fully or partially neutralizing said copolymer by one or more neutralization agents having a monovalent or polyvalent cation, said agents preferentially being chosen from among ammonia or from among calcium or magnesium hydroxides and/or oxides, or from among sodium, potassium, or lithium hydroxides, or from among aliphatic and/or cyclic primary, secondary, and tertiary amines, preferentially such as stearylamine, ethanolamines (mono-, di-, triethanolamine), mono- and diethylamine, cyclohexylamine, methylcyclohexylamine, aminomethyl propanol, morpholine, and preferentially **in that** the neutralization agent is sodium hydroxide.

5. Use, according to one of claims 1 to4, of a macromonomer in a method for manufacturing a copolymer, **characterised in that** said method comprises a step of distilling and separating said copolymer in several phases, according to static or dynamic methods, by one or more polar solvents preferentially belonging to the group constituted by water, methanol, ethanol, propanol, isopropanol, butanols, acetone, tetrahydrofuran, or mixtures thereof.
